# EUROPEAN PATENT APPLICATION

(11) **EP 4 410 924 A1**
(43) Date of publication of application: **07.08.2024**
(21) Application number: 22872540.4
(22) Date of filing: 22.07.2022
(51) Int. Cl.: C09K 5/04, F25B 1/00

(54) **COMPOSITION CONTAINING REFRIGERANT, USE OF SAME, REFRIGERATOR COMPRISING SAME, AND METHOD FOR OPERATING SAID REFRIGERATOR**

(30) Priority: 27.09.2021 JP 2021156684
(71) Applicant: Daikin Industries, Ltd., Osaka 530-0001 (JP)
(72) Inventor: ITANO, Mitsushi, Osaka-shi Osaka 530-0001 (JP); TOKUNO, Satoshi, Osaka-shi Osaka 530-0001 (JP); GOTOU, Tomoyuki, Osaka-shi Osaka 530-0001 (JP); USUI, Takashi, Osaka-shi Osaka 530-0001 (JP); YOSHIMURA, Takashi, Osaka-shi Osaka 530-0001 (JP)
(74) Representative: Hoffmann Eitle
(86) International application number: PCT/JP2022/028500
(87) International publication number: WO 2023/047784

(57) **Abstract**

An object is to provide a novel low-GWP mixed refrigerant. As a solution thereof, provided is a composition comprising a refrigerant, the refrigerant comprising HFO-1123 and HFO-1234yf, wherein the total content of HFO-1123 and HFO-1234yf is 99.5 mass% or more based on the entire refrigerant, and the content of HFO-1123 is 42.5 to 46.1 mass% and the content of HFO-1234yf is 53.9 to 57.5 mass% based on the sum of HFO-1123 and HFO-1234yf.

## Description

### Technical Field

The present disclosure relates to a composition comprising a refrigerant, use of the composition, a refrigerating machine having the composition, and a method for operating the refrigerating machine.

### Background Art

As a working medium for heat cycles that can replace R410A, a working medium for heat cycles comprising trifluoroethylene (HFO-1123) and 1,2-difluoroethylene (HFO-1132) has been proposed (PTL 1).

### Citation List

### Patent Literature

PTL 1: WO2015/005290

### Summary of Invention

### Technical Problem

An object of the present disclosure is to provide a novel low-GWP mixed refrigerant.

### Solution to Problem

Item 1. A composition comprising a refrigerant,
   the refrigerant comprising HFO-1123 and HFO-1234yf,
   wherein the total content of HFO-1123 and HFO-1234yf is 99.5 mass% or more based on the entire refrigerant, and
   the content of HFO-1123 is 42.5 to 46.1 mass% and the content of HFO-1234yf is 53.9 to 57.5 mass% based on the sum of HFO-1123 and HFO-1234yf.
Item 2. A composition comprising a refrigerant,
   the refrigerant comprising HFO-1123 and HFO-1234yf,
   wherein the total content of HFO-1123 and HFO-1234yf is 99.5 mass% or more based on the entire refrigerant, and
   the content of HFO-1123 is 31.6 to 34.3 mass% and the content of HFO-1234yf is 65.7 to 68.4 mass% based on the sum of HFO-1123 and HFO-1234yf.
Item 3. A composition comprising a refrigerant,
   the refrigerant comprising HFO-1123 and HFO-1234yf,
   wherein the total content of HFO-1123 and HFO-1234yf is 99.5 mass% or more based on the entire refrigerant, and
   the content of HFO-1123 is 25.2 to 27.5 mass% and the content of HFO-1234yf is 72.5 to 74.8 mass% based on the sum of HFO-1123 and HFO-1234yf.
Item 4. The composition according to any one of Items 1 to 3, for use as an alternative refrigerant for R404A.
Item 5. A composition comprising a refrigerant,
   the refrigerant comprising HFO-1123 and HFO-1234yf,
   wherein the total content of HFO-1123 and HFO-1234yf is 99.5 mass% or more based on the entire refrigerant, and
   the content of HFO-1123 is 43.0 to 47.9 mass% and the content of HFO-1234yf is 52.1 to 57.0 mass% based on the sum of HFO-1123 and HFO-1234yf.
Item 6. A composition comprising a refrigerant,
   the refrigerant comprising HFO-1123 and HFO-1234yf,
   wherein the total content of HFO-1123 and HFO-1234yf is 99.5 mass% or more based on the entire refrigerant, and
   the content of HFO-1123 is 32.1 to 34.3 mass% and the content of HFO-1234yf is 65.7 to 67.9 mass% based on the sum of HFO-1123 and HFO-1234yf.
Item 7. A composition comprising a refrigerant,
   the refrigerant comprising HFO-1123 and HFO-1234yf,
   wherein the total content of HFO-1123 and HFO-1234yf is 99.5 mass% or more based on the entire refrigerant, and
   the content of HFO-1123 is 25.3 to 28.1 mass% and the content of HFO-1234yf is 71.9 to 74.7 mass% based on the sum of HFO-1123 and HFO-1234yf.
Item 8. The composition according to any one of Items 1 to 7, for use as an alternative refrigerant for R410A.
Item 9. The composition according to any one of Items 1 to 8, wherein the refrigerant consists of HFO-1123 and HFO-1234yf.
Item 10. The composition according to any one of Items 1 to 9, further comprising a refrigeration oil.
Item 11. A refrigeration method comprising operating a refrigeration cycle using the composition of any one of Items 1 to 10.
Item 12. A refrigeration apparatus comprising the composition of any one of Items 1 to 10 as a working fluid.

### Advantageous Effects of Invention

The refrigerant according to the present disclosure has a low GWP.

### Description of Embodiments

The present inventors conducted intensive studies to solve the above problem, and consequently found that a mixed refrigerant comprising HFO-1132(E) and R1234yf has the above properties.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the term "air-conditioning system for vehicles" is a type of refrigeration apparatus for use in vehicles, such as gasoline vehicles, hybrid vehicles, electric vehicles, and hydrogen vehicles. The air-conditioning system for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, the term "pressure" refers to absolute pressure unless otherwise specified.

### 1. Refrigerant

The refrigerant according to the present disclosure comprises HFO-1123 and HFO-1234yf, wherein the total content of HFO-1123 and HFO-1234yf is 99.5 mass% or more based on the entire refrigerant.

The refrigerant according to the present disclosure is a low-GWP mixed refrigerant.

When the content of HFO-1123 is 9.8 to 55.0 mass% based on the sum of HFO-1123 and HFO-1234yf, the refrigerant according to the present disclosure has a GWP of 4 or less, a COP ratio of 94% or more relative to that of HFO-1234yf, a refrigerating capacity ratio of 121% or more relative to that of HFO-1234yf, a boiling point or -40°C or less, and a critical temperature of 75.3°C or more, and disproportionation reaction does not occur even at 5 MPa and 150°C.

Therefore, the refrigerant according to the present disclosure is preferred because it can suppress disproportionation reaction even in the event of abnormal operating conditions in which the pressure of the refrigerant is locally 5 MPa within the refrigeration cycle and the temperature of the refrigerant is locally 150°C within the refrigeration cycle.

The critical temperature of R1234yf is 95.0°C, whereas the critical temperature of HFO-1123 is 59.2°C. Since the critical temperature of HFO-1123 is low, the critical temperature of a mixture of HFO-1123 and R1234yf is lower than the critical temperature of R1234yf. For example, refrigeration cycle equipment for vehicles may be used under high-temperature conditions in which the temperature of the air exchanging heat with the refrigerant in the radiator is high. In that case, if the critical temperature of the refrigerant is low, the refrigerating capacity due to the properties of the refrigerant (i.e., cycle performance) is lowered; thus, the critical temperature is desirably higher. The fact that a high critical temperature is better also applies to other heat cycle equipment.

In vehicle air conditioners, the condenser may be placed near the engine that generates heat, or when the vehicle is parked, the heat from the engine may accumulate in the engine compartment. Accordingly, the temperature of the air cooling the condenser may rise by nearly 20°C with respect to the outside temperature. In that case, for example, when the outside temperature is 40°C, the cooling air temperature becomes around 60°C, and the refrigerant condensing temperature becomes 65 to 75°C. When the outside temperature is 50°C, the cooling air temperature becomes around 70°C, and the refrigerant condensing temperature becomes 75 to 85°C. Thus, compared to home and commercial air conditioners, vehicle air conditioners are sometimes operated under higher-temperature conditions in which the temperature of the air cooling the condenser is higher (i.e., higher refrigerant condensing temperature). Accordingly, the critical temperature of the refrigerant for vehicle air conditioners is 80°C or more, preferably 85°C or more, and more preferably 86.5°C or more.

Therefore, the content of HFO-1123 is 39.5 mass% or less, preferably 24.0 mass% or less, and even more preferably 19.7 mass% or less, based on the sum of HFO-1123 and HFO-1234yf.

Moreover, the refrigerant according to the present disclosure has a boiling point of -40°C or less and thus has the advantage of being easy to use in heating with heat pumps. For example, the refrigerant according to the present disclosure is advantageous in that it can be used to operate the refrigeration cycle of an air-conditioning system for vehicles to thereby allow heating with a heat pump, which consumes less power than electric heaters. Examples of air-conditioning systems for vehicles include air-conditioning systems for gasoline vehicles, hybrid vehicles, electric vehicles, or hydrogen vehicles.

In contrast, in home and commercial air conditioners, the refrigerant condensing temperature in the condenser, that is, the temperature of the refrigerant after heat exchange with air, is higher than the outside temperature by several degrees Celsius to tens of degrees Celsius. For example, when the outside temperature is 40°C, the cooling air temperature, which is the temperature of the air cooling the condenser, becomes around 45°C, and the refrigerant condensing temperature becomes 50 to 60°C. When the outside temperature is 50°C, the cooling air temperature becomes around 55°C, and the refrigerant condensing temperature becomes 60°C to 70°C. Therefore, the critical temperature of the refrigerant for home and commercial air conditioners is 75°C or more, preferably 80°C or more, and more preferably 81.5°C or more.

When the content of HFO-1123 is 42.5 to 46.1 mass% and the content of HFO-1234yf is 53.9 to 57.5 mass% based on the sum of HFO-1123 and HFO-1234yf, the refrigerant according to the present disclosure has a GWP of 3 or less, a COP ratio of 98.0% or more relative to that of R404A, a refrigerating capacity ratio of 97.5% or more relative to that of R404A, and a critical temperature of 78.0°C or more, and disproportionation reaction does not occur even at 5 MPa and 150°C.

When the content of HFO-1123 is 31.6 to 34.3 mass% and the content of HFO-1234yf is 65.7 to 68.4 mass% based on the sum of HFO-1123 and HFO-1234yf, the refrigerant according to the present disclosure has a GWP of 3 or less, a COP ratio of 100.2% or more relative to that of R404A, a refrigerating capacity ratio of 85.0% or more relative to that of R404A, and a critical temperature of 81.5°C or more, and disproportionation reaction does not occur even at 5 MPa and 150°C.

When the content of HFO-1123 is 25.2 to 27.5 mass% and the content of HFO-1234yf is 72.5 to 74.8 mass% based on the sum of HFO-1123 and HFO-1234yf, the refrigerant according to the present disclosure has a GWP of 3, a COP ratio of 101.5% or more relative to that of R404A, a refrigerating capacity ratio of 78% or more relative to that of R404A, and a critical temperature of 83.7°C or more, and disproportionation reaction does not occur even at 5 MPa and 150°C.

When the content of HFO-1123 is 43.0 to 47.9 mass% and the content of HFO-1234yf is 52.1 to 57.0 mass% based on the sum of HFO-1123 and HFO-1234yf, the refrigerant according to the present disclosure has a GWP of 3, a COP ratio of 97.5% or more relative to that of R410A, a refrigerating capacity ratio of 75% or more relative to that of R410A, and a critical temperature of 77.4°C or more, and disproportionation reaction does not occur even at 5 MPa and 150°C.

When the content of HFO-1123 is 32.1 to 34.3 mass% and the content of HFO-1234yf is 65.7 to 67.9 mass% based on the sum of HFO-1123 and HFO-1234yf, the refrigerant according to the present disclosure has a GWP of 3, a COP ratio of 100% or more relative to that of R410A, a refrigerating capacity ratio of 67.5% or more relative to that of R410A, and a critical temperature of 81.5°C or more, and disproportionation reaction does not occur even at 5 MPa and 150°C.

When the content of HFO-1123 is 25.3 to 28.1 mass% and the content of HFO-1234yf is 71.9 to 74.7 mass% based on the sum of HFO-1123 and HFO-1234yf, the refrigerant according to the present disclosure has a GWP of 3, a COP ratio of 101% or more relative to that of R410A, a refrigerating capacity ratio of 62.5% or more relative to that of R410A, and a critical temperature of 83.5°C or more, and disproportionation reaction does not occur even at 5 MPa and 150°C.

The refrigerant according to the present disclosure may further comprise additional refrigerants in addition to HFO-1123 and HFO-1234yf, as long as the above properties and effects are not impaired. In this respect, in an embodiment, the refrigerant according to the present disclosure preferably comprises HFO-1123 and HFO-1234yf in a total amount of 99.75 mass% or more, more preferably 99.9 mass% or more, even more preferably 99.999 mass% or more, and most preferably 99.9999 mass% or more, based on the entire refrigerant. The refrigerant according to the present disclosure may essentially consist of HFO-1123 and HFO-1234yf. In this case, the refrigerant according to the present disclosure may consist of HFO-1123 and HFO-1234yf, as well as inevitable impurities. The refrigerant according to the present disclosure may consist of HFO-1123 and HFO-1234yf.

Examples of additional refrigerants include HFO-1132a, E-HFO-1132, Z-HFO-1132, HFO-1243zf, HFC-245cb, and the like.

Such additional refrigerants are not limited, and can be selected from a wide range of refrigerants. The mixed refrigerant may comprise a single additional refrigerant, or two or more additional refrigerants.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer. FC-14 (tetrafluoromethane, CF₄) HCC-40 (chloromethane, CH₃Cl) HFC-23 (trifluoromethane, CHF₃) HFC-41 (fluoromethane, CH₃F) HFC-125 (pentafluoroethane, CF₃CHF₂) HFC-134a (1,1,1,2-tetrafluoroethane, CF₃CH₂F) HFC-134 (1,1,2,2-tetrafluoroethane, CHF₂CHF₂) HFC-143a (1,1,1-trifluoroethane, CF₃CH₃) HFC-143 (1,1,2-trifluoroethane, CHF₂CH₂F) HFC-152a (1,1-difluoroethane, CHF₂CH₃) HFC-152 (1,2-difluoroethane, CH₂FCH₂F) HFC-161 (fluoroethane, CH₃CH₂F) HFC-245fa (1,1,1,3,3-pentafluoropropane, CF₃CH₂CHF₂) HFC-236fa (1,1,1,3,3,3-hexafluoropropane, CF₃CH₂CF₃) HFC-236ea (1,1,1,2,3,3-hexafluoropropane, CF₃CHFCHF₂) HFC-227ea (1,1,1,2,3,3,3-heptafluoropropane, CF₃CHFCF₃) HCFC-22 (chlorodifluoromethane, CHClF₂) HCFC-31 (chlorofluoromethane, CH₂ClF) CFC-1113 (chlorotrifluoroethylene, CF₂=CClF) HFE-125 (trifluoromethyl-difluoromethyl ether, CF₃OCHF₂) HFE-134a (trifluoromethyl-fluoromethyl ether, CF₃OCH₂F) HFE-143a (trifluoromethyl-methyl ether, CF₃OCH₃) HFE-227ea (trifluoromethyl-tetrafluoroethyl ether, CF₃OCHFCF₃) HFE-236fa (trifluoromethyl-trifluoroethyl ether, CF₃OCH₂CF₃)

The refrigerant composition according to the present disclosure may contain tracers at a total concentration of about 10 parts per million by weight (ppm) or more based on the entire refrigerant composition. The refrigerant composition according to the present disclosure may also contain tracers at a total concentration of about 1000 ppm or less based on the entire refrigerant composition. The refrigerant composition according to the present disclosure may preferably contain tracers at a total concentration of about 30 ppm or more, and more preferably about 50 ppm or more, based on the entire refrigerant composition. The refrigerant composition according to the present disclosure may preferably contain tracers at a total concentration of about 500 ppm or less, and more preferably about 300 ppm or less, based on the entire refrigerant composition.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 mass% or more of refrigeration oil. The refrigeration oil-containing working fluid generally comprises 50 mass% or less of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. Further, a refrigeration oil with a kinematic viscosity of 400 cSt or less at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

The embodiments are described above; however, it will be understood that various changes in forms and details can be made without departing from the spirit and scope of the claims.

### Examples

The present disclosure is described in more detail below with reference to Examples. However, the present disclosure is not limited to the Examples.

The GWP of HFO-1234yf, R404A (R125/R134a/R143a = 44/4/52 mass%), and R410A (R32/R125 = 50/50 mass%), as well as the mixed refrigerants shown in Tables 1 to 3, was evaluated based on the values stated in the Intergovernmental Panel on Climate Change (IPCC), fourth report. Further, the COP, refrigerating capacity, discharge temperature, and discharge pressure of HFO-1234yf, R404A, and R410A, as well as the above mixed refrigerants, were determined by performing theoretical refrigeration cycle calculations for the mixed refrigerants using the National Institute of Science and Technology (NIST) and Reference Fluid Thermodynamic and Transport Properties Database (Refprop 9.0) under the following conditions. The physical property values of HFO-1123 used in the theoretical refrigeration cycle calculations were determined by actual measurements.

The COP ratio and the refrigerating capacity ratio of the mixed refrigerants relative to those of HFO-1234yf, R404A, and R410A were determined. The calculation conditions were as follows.
Evaporating temperature: -30°C (Table 1), -40°C (Table 2), 5°C (Table 3)
Condensation temperature: 30°C (Table 1), 40°C (Table 2), 45°C (Table 3)
Degree of superheating: 5 K (Table 1), 20 K (Table 2), 5 K (Table 3)
Degree of subcooling: 5 K (Table 1), 0 K (Table 2), 5 K (Table 3) Compressor efficiency: 70%

Tables 1 to 3 show these values together with the GWP of each mixed refrigerant. The COP and refrigerating capacity are ratios relative to HFO-1234yf, R404A, or R410A.

The coefficient of performance (COP) was determined by the following formula. COP = (refrigerating capacity or heating capacity) / power consumption

For each of these mixed refrigerants, the occurrence of disproportionation reaction was examined using the following test method and test conditions.

### Test method

The refrigerant composition to be tested was transferred into a test container and heated to 150°C, and then voltage was applied to a Pt wire inside the container to melt it, thereby applying 30 J of energy to the refrigerant composition. The occurrence of disproportionation reaction was determined based on the rapid rise in pressure and temperature inside the device.

### Test conditions

### Test container: 38 cc SUS container

### Test temperature: 150°C

### Pressure: 5 MPa

### Determination criteria:

Non-explosion: The temperature or pressure after melting the Pt wire was less than two-fold, and rapid disproportionation reaction did not occur.

Explosion: The temperature or pressure after melting the Pt wire reached two-fold or more, and rapid disproportionation reaction occurred.

In Table 1, the "COP ratio" and the "refrigerating capacity ratio" refer to a ratio (%) relative to R1234yf. In Table 1, the "discharge temperature (°C)" refers to a temperature at which the refrigerant has the highest temperature in the refrigeration cycle according to the theoretical refrigeration cycle calculations of the mixed refrigerant. In Table 1, the "discharge pressure (Mpa)" refers to a pressure at which the refrigerant has the highest pressure in the refrigeration cycle according to the theoretical refrigeration cycle calculations of the mixed refrigerant.

In Table 1, the "boiling point (°C)" means a temperature at which the liquid phase of the mixed refrigerant has atmospheric pressure (101.33 kPa). In Table 1, the "motor power consumption amount (%)" refers to electrical energy used to enable an electric vehicle to run, and is expressed as a ratio with respect to a power consumption amount when the refrigerant is HFO-1234yf. In Table 1, the "heater power consumption amount (%)" refers to electrical energy used to enable an electric vehicle to drive a heater, and is expressed as a ratio with respect to a power consumption amount when the refrigerant is HFO-1234yf. In Table 1, the "drivable distance" refers to a distance drivable by an electric vehicle equipped with a rechargeable battery having a constant electric capacity while having a heater turned on, and is expressed as a ratio (%) relative to a drivable distance (100%) when the vehicle is driven without a heater turned on (i.e., heater power consumption is 0).

Heating was performed by using an electric heater in the case of a refrigerant having a boiling point of more than - 40°C, and using a heat pump in the case of a refrigerant having a boiling point of -40°C or less.

The power consumption amount when the heater was used was calculated according to the following equation. Power consumption amount when the heater was used = heating capacity / COP of heater

The COP of the heater refers to heating efficiency.

With regard to the heating efficiency, the COP of the heater is 1 in an electric heater, and the heater consumes electrical power equivalent to the motor power. In the case of a heat pump, the COP of the heater was determined by performing theoretical refrigeration cycle calculations for the mixed refrigerants using Refprop 9.0 of the National Institute of Science and Technology (NIST) under the following conditions.
Evaporation temperature: -30°C
Condensation temperature: 30°C
Superheating temperature: 5 K
Supercooling temperature: 5 K
Compressor efficiency: 70%

The drivable distance was calculated according to the following equation. Drivable distance = (battery capacity) / (motor power consumption amount + heater power consumption amount)

**Table 1**

| Item | | Unit | Refence Example 1-1 | Comparative Example 1-1 | Comparative Example 1-2 | Example 1-1 | Example 1-2 | Example 1-3 | Example 1-4 | Example 1-5 | Example 1-6 | Comparative Example 1- 3 | Comparative Example 1-4 |
|---|---|---|---|---|---|---|---|---|---|---|---|---|---|
| Composition ratio | HFO-1123 | mass% | 0.0 | 0.0 | 5.0 | 9.8 | 19.7 | 24.0 | 39.5 | 50.0 | 55.0 | 57.0 | 60.0 |
| | HFO-1234yf | mass% | 0.0 | 100.0 | 95.0 | 90.2 | 80.3 | 76.0 | 60.5 | 50.0 | 45.0 | 43.0 | 40.0 |
| | R134a | mass% | 100.0 | 0.0 | 0.0 | 0.0 | 0.0 | 0.0 | 0.0 | 0.0 | 0.0 | 0.0 | 0.0 |
| GWP (AR4) | | - | 1430 | 4 | 4 | 4 | 3 | 3 | 3 | 3 | 2 | 2 | 2 |
| COP ratio (relative to R1234yf) | | % | 105 | 100 | 99 | 99 | 98 | 98 | 96 | 95 | 94 | 94 | 94 |
| Refrigerating capacity ratio (relative to R1234yf) | | % | 99 | 100 | 110 | 121 | 142 | 152 | 186 | 209 | 220 | 225 | 231 |
| Motor power consumption amount | | % | 100 | 100 | 100 | 100 | 100 | 100 | 100 | 100 | 100 | - | - |
| Heater power consumption amount | | % | 95 | 100 | 100 | 33 | 33 | 33 | 33 | 33 | 33 | - | - |
| Drivable distance (without heater) | | % | 100 | 100 | 100 | 100 | 100 | 100 | 100 | 100 | 100 | - | - |
| Drivable distance (with heater) | | % | 50 | 50 | 50 | 84 | 84 | 84 | 84 | 84 | 84 | - | - |
| Discharge temperature | | °C | 66.0 | 48.0 | 51.4 | 54.1 | 58.2 | 59.6 | 63.4 | 65.2 | 65.8 | 66.0 | 66.3 |
| Discharge pressure | | Mpa | 0.77 | 0.78 | 0.88 | 0.97 | 1.14 | 1.21 | 1.46 | 1.63 | 1.72 | 1.75 | 1.80 |
| Boiling point | | °C | 26.1 | -29.5 | 35.8 | 40.0 | -45.7 | -47.4 | -51.7 | 53.6 | -54.4 | -54.6 | 55.0 |
| Critical temperature | | °C | 101.1 | 94.7 | 92.6 | 90.5 | 86.5 | 85.0 | 80.0 | 76.8 | 75.3 | 74.7 | 73.8 |
| Critical pressure | | Mpa | 4.06 | 3.38 | 3.51 | 3.61 | 3.78 | 3.84 | 4.07 | 4.22 | 4.29 | 4.31 | 4.35 |
| Heating method | | System | Electrical heater | Electrical heater | Electrical heater | Heat pump | Heat pump | Heat pump | Heat pump | Heat pump | Heat pump | - | - |
| Disproportionation reaction (5 Mpa/150°C) | | - | - | - | Non-explosion | Non-explosion | Non-explosion | Non-explosion | Non-explosion | Non-explosion | Non-explosion | Explosion | Explosion |

In Table 2, the "COP ratio" and the "refrigerating capacity ratio" refer to a ratio (%) relative to R404A. In Table 2, the "discharge temperature (°C)" refers to a temperature at which the refrigerant has the highest temperature in the refrigeration cycle according to the theoretical refrigeration cycle calculations of the mixed refrigerant.

**Table 2**

| Item | | Unit | Comparative Example2-1 | Comparative Example2-2 | Comparative Example2-3 | Example2-1 | Example2-2 | Example2-3 | Example2-4 | Example2-5 | Example2-6 | Comparative Example2-4 | Comparative Example2-5 | Comparative Example2-6 |
|---|---|---|---|---|---|---|---|---|---|---|---|---|---|---|
| Composition ratio | HFO-1123 | mass% | R404A | 10.0 | 20.0 | 25.2 | 27.5 | 31.6 | 34.3 | 42.5 | 46.1 | 55.0 | 57.0 | 60.0 |
| | HFO-1234yf | mass% | | 20.0 | 80.0 | 74.8 | 72.5 | 68.4 | 65.7 | 57.5 | 53.9 | 45.0 | 43.0 | 40.0 |
| GWP (AR4) | | - | 3922 | 4 | 3 | 3 | 3 | 3 | 3 | 3 | 3 | 2 | 2 | 2 |
| COP ratio (relative to R404A) | | % | 100.0 | 104.7 | 102.9 | 102.0 | 101.5 | 100.7 | 100.2 | 98.6 | 98.0 | 96.3 | 96.0 | 95.5 |
| Refrigerating capacity ratio (relative to R404A) | | % | 100.0 | 62.5 | 72.6 | 78.0 | 80.5 | 85.0 | 88.0 | 97.5 | 101.8 | 112.6 | 115.1 | 118.9 |
| Discharge tem perature | | °c | 93 | 86 | 91 | 93 | 94 | 96 | 97 | 99 | 100 | 102 | 102 | 103 |
| Discharge pressure | | Mpa | 1.82 | 1.25 | 1.47 | 1.58 | 1.62 | 1.71 | 1.76 | 1.93 | 2.01 | 2.19 | 2.23 | 2.29 |
| Critical tem perature | | °c | 72.0 | 90.4 | 86.4 | 84.5 | 83.7 | 82.4 | 81.5 | 79.1 | 78.0 | 75.3 | 74.7 | 73.8 |
| Critical pressure | | Mpa | 3.73 | 3.61 | 3.78 | 3.85 | 3.89 | 3.95 | 3.99 | 4.12 | 4.17 | 4.29 | 4.32 | 4.35 |
| Disproportionation reaction (3 Mpa) | | - | - | Non-explosion | Non-explosion | Non-explosion | Non-explosion | Non-explosion | Non-explosion | Non-explosion | Non-explosion | Non-explosion | Explosion | Explosion |

**Table 3**

| Item | | Unit | Comparative Example 3-1 | Com parative Example 3-2 | Com parative Example 3-3 | Example 3-1 | Example 3-2 | Example 3-3 | Example 3-4 | Example 3-5 | Example 3-6 | Comparative Example 3-5 | Com parative Example 3-6 | Com parative Example 3-7 |
|---|---|---|---|---|---|---|---|---|---|---|---|---|---|---|
| Composition ratio | HFO-1123 | mass% | R410A | 10.0 | 20.0 | 25.3 | 28.1 | 32.1 | 34.3 | 43.0 | 47.9 | 55.0 | 57.0 | 60.0 |
| | HFO-1234yf | mass% | | 90.0 | 80.0 | 74.7 | 71.9 | 67.9 | 65.7 | 57.0 | 52.1 | 45.0 | 43.0 | 40.0 |
| GWP (AR4) | | - | 2088 | 4 | 3 | 3 | 3 | 3 | 3 | 3 | 3 | 2 | 2 | 2 |
| COP ratio (relative to R410Af) | | % | 100.0 | 102.9 | 102.0 | 101.4 | 101.0 | 100.4 | 100.0 | 98.4 | 97.5 | 96.2 | 95.8 | 95.3 |
| Refrigerating capacity ratio (relative to R410A) | | % | 100.0 | 50.3 | 58.5 | 62.5 | 64.6 | 67.5 | 69.1 | 750 | 78.2 | 82.7 | 84.0 | 85.8 |
| Discharge tem perature | | °C | 77 | 59 | 62 | 64 | 64 | 65 | 65 | 66 | 66 | 67 | 67 | 67 |
| Discharge pressure | | Mpa | 2.73 | 1.41 | 1.65 | 1.78 | 1.84 | 1.93 | 1.98 | 2.18 | 2.30 | 2.46 | 2.51 | 2.57 |
| Critical temperature | | °C | 71.4 | 90.4 | 86.4 | 84.5 | 83.5 | 82.2 | 81.5 | 78.9 | 77.4 | 75.3 | 74.7 | 73.8 |
| Critical pressure | | Mpa | 4.90 | 3.61 | 3.78 | 3.85 | 3.90 | 3.96 | 3.99 | 4.12 | 4.19 | 4.29 | 4.32 | 4.35 |
| Disproportionation reaction (3 Mpa) | | - | - | Non-explosion | Non-explosion | Non-explosion | Non-explosion | Non-explosion | Non-explosion | Non-explosion | Non-explosion | Non-explosion | Explosion | Explosion |

In Table 3, the "COP ratio" and the "refrigerating capacity ratio" refer to a ratio (%) relative to R410A. In Table 3, the "discharge temperature (°C)" refers to a temperature at which the refrigerant has the highest temperature in the refrigeration cycle according to the theoretical refrigeration cycle calculations of the mixed refrigerant. In Table 3, the "discharge pressure (Mpa)" refers to a pressure at which the refrigerant has the highest pressure in the refrigeration cycle according to the theoretical refrigeration cycle calculations of the mixed refrigerant.

The results of Table 1 reveal that when the content of HFO-1123 is 9.8 to 55.0 mass% and the content of HFO-1234yf is 45.0 to 90.2 mass% based on the sum of HFO-1123 and HFO-1234yf, the refrigerant according to the present disclosure has a GWP of 4 or less, a COP ratio of 94% or more relative to that of HFO-1234yf, a refrigerating capacity ratio of 121% or more relative to that of HFO-1234yf, a boiling point of -40°C or less, and a critical temperature of 75.3°C or more, and disproportionation reaction does not occur at 5 MPa and 150°C

The results of Table 2 reveal that when the content of HFO-1123 is 42.5 to 46.1 mass% and the content of HFO-1234yf is 53.9 to 57.5 mass% based on the sum of HFO-1123 and HFO-1234yf, the refrigerant according to the present disclosure has a GWP of 3 or less, a COP ratio of 98% or more relative to that of R404A, a refrigerating capacity ratio of 97.5% or more relative to that of R404A, and a critical temperature of 78°C or more, and disproportionation reaction does not occur even at 5 MPa and 150°C.

Further, the results of Table 2 reveal that when the content of HFO-1123 is 31.6 to 34.3 mass% and the content of HFO-1234yf is 65.7 to 68.4 mass% based on the sum of HFO-1123 and HFO-1234yf, the refrigerant according to the present disclosure has a GWP of 3 or less, a COP ratio of 100.2% or more relative to that of R404A, a refrigerating capacity ratio of 85.0% or more relative to that of R404A, and a critical temperature of 81.5°C or more, and disproportionation reaction does not occur even at 5 MPa and 150°C.

Further, the results of Table 2 reveal that when the content of HFO-1123 is 25.2 to 27.5 mass% and the content of HFO-1234yf is 72.5 to 74.8 mass% based on the sum of HFO-1123 and HFO-1234yf, the refrigerant according to the present disclosure has a GWP of 3, a COP ratio of 101.5% or more relative to that of R404A, a refrigerating capacity ratio of 78% or more relative to that of R404A, a discharge temperature of 93°C or more, and a critical temperature of 83.7°C or more, and disproportionation reaction does not occur even at 5 MPa and 150°C.

Further, the results of Table 3 reveal that when the content of HFO-1123 is 43.0 to 47.9 mass% and the content of HFO-1234yf is 52.1 to 57.0 mass% based on the sum of HFO-1123 and HFO-1234yf, the refrigerant according to the present disclosure has a GWP of 3, a COP ratio of 97.5% or more relative to that of R410A, a refrigerating capacity ratio of 75% or more relative to that of R410A, and a critical temperature of 77.4°C or more, and disproportionation reaction does not occur even at 5 MPa and 150°C.

Further, the results of Table 3 reveal that when the content of HFO-1123 is 32.1 to 34.3 mass% and the content of HFO-1234yf is 65.7 to 67.9 mass% based on the sum of HFO-1123 and HFO-1234yf, the refrigerant according to the present disclosure has a GWP of 3, a COP ratio of 100.0% or more relative to that of R410A, a refrigerating capacity ratio of 67.5% or more relative to that of R410A, and a critical temperature of 81.5°C or more, and disproportionation reaction does not occur even at 5 MPa and 150°C.

Further, the results of Table 3 reveal that when the content of HFO-1123 is 25.3 to 28.1 mass% and the content of HFO-1234yf is 71.9 to 74.7 mass% based on the sum of HFO-1123 and HFO-1234yf, the refrigerant according to the present disclosure has a GWP of 3, a COP ratio of 101% or more relative to that of R410A, a refrigerating capacity ratio of 62.5% or more relative to that of R410A, and a critical temperature of 83.5°C or more, and disproportionation reaction does not occur even at 5 MPa and 150°C.

## Claims

1. A composition comprising a refrigerant,
the refrigerant comprising HFO-1123 and HFO-1234yf,
wherein the total content of HFO-1123 and HFO-1234yf is 99.5 mass% or more based on the entire refrigerant, and
the content of HFO-1123 is 42.5 to 46.1 mass% and the content of HFO-1234yf is 53.9 to 57.5 mass% based on the sum of HFO-1123 and HFO-1234yf.

2. A composition comprising a refrigerant,
the refrigerant comprising HFO-1123 and HFO-1234yf,
wherein the total content of HFO-1123 and HFO-1234yf is 99.5 mass% or more based on the entire refrigerant, and
the content of HFO-1123 is 31.6 to 34.3 mass% and the content of HFO-1234yf is 65.7 to 68.4 mass% based on the sum of HFO-1123 and HFO-1234yf.

3. A composition comprising a refrigerant,
the refrigerant comprising HFO-1123 and HFO-1234yf,
wherein the total content of HFO-1123 and HFO-1234yf is 99.5 mass% or more based on the entire refrigerant, and
the content of HFO-1123 is 25.2 to 27.5 mass% and the content of HFO-1234yf is 72.5 to 74.8 mass% based on the sum of HFO-1123 and HFO-1234yf.

4. The composition according to any one of claims 1 to 3, for use as an alternative refrigerant for R404A.

5. A composition comprising a refrigerant,
the refrigerant comprising HFO-1123 and HFO-1234yf,
wherein the total content of HFO-1123 and HFO-1234yf is 99.5 mass% or more based on the entire refrigerant, and
the content of HFO-1123 is 43.0 to 47.9 mass% and the content of HFO-1234yf is 52.1 to 57.0 mass% based on the sum of HFO-1123 and HFO-1234yf.

6. A composition comprising a refrigerant,
the refrigerant comprising HFO-1123 and HFO-1234yf,
wherein the total content of HFO-1123 and HFO-1234yf is 99.5 mass% or more based on the entire refrigerant, and
the content of HFO-1123 is 32.1 to 34.3 mass% and the content of HFO-1234yf is 65.7 to 67.9 mass% based on the sum of HFO-1123 and HFO-1234yf.

7. A composition comprising a refrigerant,
the refrigerant comprising HFO-1123 and HFO-1234yf,
wherein the total content of HFO-1123 and HFO-1234yf is 99.5 mass% or more based on the entire refrigerant, and
the content of HFO-1123 is 25.3 to 28.1 mass% and the content of HFO-1234yf is 71.9 to 74.7 mass% based on the sum of HFO-1123 and HFO-1234yf.

8. The composition according to any one of claims 1 to 7, for use as an alternative refrigerant for R410A.

9. The composition according to any one of claims 1 to 8, wherein the refrigerant consists of HFO-1123 and HFO-1234yf.

10. The composition according to any one of claims 1 to 9, comprising at least one substance selected from the group consisting of water, tracers, ultraviolet fluorescent dyes, stabilizers, and polymerization inhibitors.

11. A refrigeration method comprising operating a refrigeration cycle using the composition of any one of claims 1 to 10.

12. An air-conditioning system, a refrigerator, a freezer, a water cooler, an ice maker, a refrigerated showcase, a freezing showcase, a freezing and refrigerating unit, a refrigerating machine for freezing and refrigerating warehouses, an air-conditioning system for vehicles, a turbo refrigerating machine, or a screw refrigerating machine, each comprising the composition of any one of claims 1 to 10 as a working fluid.
